Europäisches Patentamt

European Patent Office

Office européen des brevets

(19)

(11) Numéro de publication : **0 456 568 A2**

# (12) DEMANDE DE BREVET EUROPEEN

(21) Numéro de dépôt : **91401182.0**

(22) Date de dépôt : **06.05.91**

(51) Int. Cl.⁵ : **G08B 25/10, H04B 1/034**

(30) Priorité : **07.05.90 FR 9005717**

(43) Date de publication de la demande :
**13.11.91 Bulletin 91/46**

(84) Etats contractants désignés :
**AT BE CH DE DK ES GB GR IT LI LU NL SE**

(71) Demandeur : **SOCIETE ELECTROLUX S.A.**
**43, Avenue Félix Louat**
**F-60300 Senlis (FR)**

(72) Inventeur : **Bourgoing, Dominique**
**Aumont**
**F-60300 Senlis (FR)**

(74) Mandataire : **Mongrédien, André et al**
**c/o SOCIETE DE PROTECTION DES**
**INVENTIONS 25, rue de Ponthieu**
**F-75008 Paris (FR)**

(54) **Procédé de transmission d'un message code numériquement et système d'émission.**

(57)  Lors d'une émission d'un signal de radiofréquence, on émet deux salves (S1, S2) successives comprenant chacune au moins une trame (T), chaque trame (T) comportant au moins le message à transmettre, un silence (Si) de durée aléatoire séparant l'émission de chaque salve (S1, S2) ; un système d'émission permettant la transmission de cette émission comporte un émetteur (24) muni d'une antenne (40), des moyens de codage (14) pour engendrer le message à émettre, l'émetteur (24) et les moyens de codage (14) étant disposés de part et d'autre d'un plan de masse (28).
    Application au domaine des dispositifs de surveillance et d'assistance.

FIG. 7

La présente invention a pour objet un procédé de transmission d'un message codé numériquement et un système d'émission. Elle s'applique notamment au domaine des dispositifs de surveillance, pour l'aide aux personnes malades ou âgées ou bien pour la sécurité, mais aussi, de manière plus générale, au domaine des dispositifs de gestion de site à usage d'habitation, commercial, industriel ou autre.

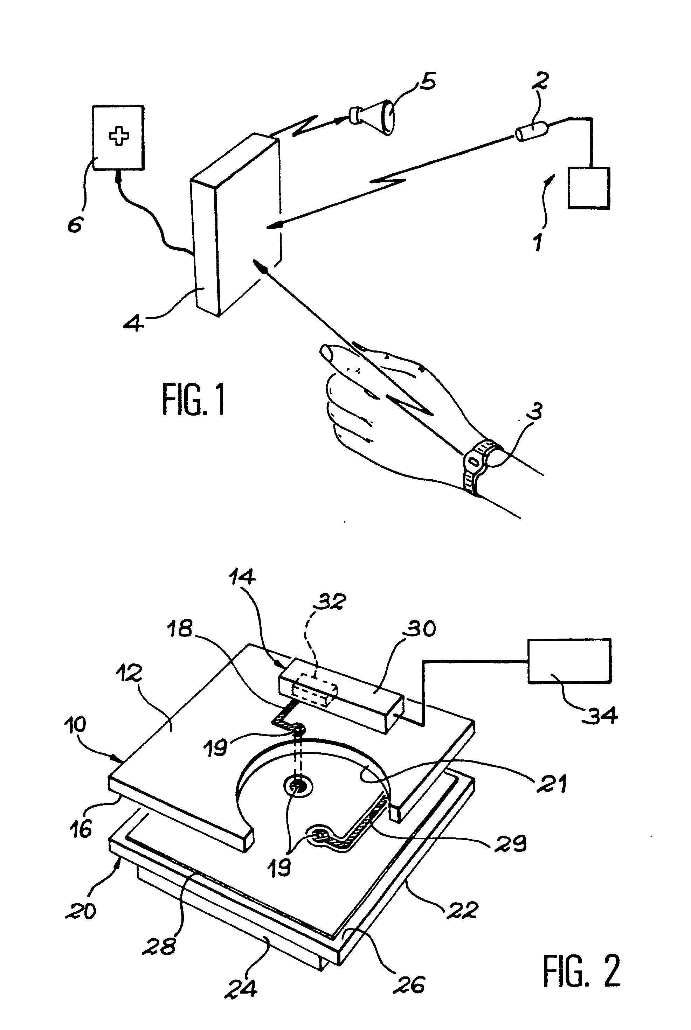

En référence à la figure 1, on décrit un système de surveillance connu. Un tel système comporte plusieurs systèmes d'émission de signaux de radiofréquences.

Un premier type de système d'émission 1 comporte un capteur 2 (hygromètre, thermomètre, détecteur de présence ou autre) relié à des moyens pour coder et émettre un signal de radiofréquence représentatif de la mesure effectuée par le capteur.

Un second type de système d'émission 3 est porté par un utilisateur, personne âgée ou malade. Dans ce cas, c'est l'utilisateur lui-même qui déclenche l'émission par action sur le système d'émission 3.

Les signaux émis par les systèmes d'émission sont captés par un (ou plusieurs) récepteur(s) 4 qui selon le cas commande(nt) par exemple une sonnerie d'alarme 5 ou alerte(nt) un centre d'intervention (médecin, hôpital, police, ...) par l'intermédiaire du réseau téléphonique.

Chaque système d'émission émet un message codé numériquement transmis par le signal de radiofréquence. Un grand nombre de messages peuvent être émis par les différents systèmes d'émission. Chaque message comprend un message d'identification du système d'émission et du récepteur visé et un message portant l'information à transmettre (par exemple le résultat d'une mesure effectuée par un capteur). Malgré tout, des perturbations (mauvaise réception, parasites modifiant les bits du message, ...) peuvent dénaturer le message. On comprend que les messages doivent être émis selon un protocole tel que le risque d'erreur dans l'interprétation (au niveau de la réception) soit diminué au maximum, des conséquences préjudiciables à l'usager pouvant résulter de toute confusion : un appel vers un centre d'intervention peut être omis ou encore une alarme déclenchée sans raison.

D'autre part, pour des raisons de commodité, un système d'émission individuel porté par l'usager doit présenter un faible encombrement. Mais on connaît les difficultés pour réduire le volume d'un dispositif comportant des moyens d'émission d'un signal de radiofréquence. En effet, ceux-ci perturbent et sont perturbés par les moyens pour coder le message à transmettre. Le découplage de ces moyens à l'aide de différentes techniques connues, blindage ou autre, entraîne obligatoirement un accroissement de l'encombrement.

Enfin de manière connue, les systèmes d'émission sont dédiés, c'est-à-dire par exemple qu'un système d'émission destiné à être couplé à un capteur de présence n'est pas identique à un système d'émission individuel. Lors de leur fabrication, les systèmes d'émission sont réglés en fonction de leur application. Ces réglages sont longs et délicats ce qui présente un grave inconvénient pour une production de masse.

Un premier but de la présente invention est de fournir un protocole de transmission du message numérique émis par radiofréquence tel qu'il évite toute erreur d'interprétation à la réception. De cette manière, on s'assure de la validité du message en réduisant au minimum les risques de fausse alerte ou toute autre confusion.

Un autre but de la présente invention est de fournir un système d'émission qui ne présente qu'un faible encombrement. Porté par un usager, le système d'émission n'entrave en rien ses mouvements et ses déplacements à l'intérieur du site considéré.

Un autre objet de l'invention est de fournir un système d'émission ne nécessitant pas de réglage compliqué pour une production de masse. D'autre part, sa destination peut être changée simplement.

De façon plus précise, la présente invention concerne un procédé de transmission d'un message codé numériquement consistant à émettre au moins deux salves successives comprenant chacune au moins une trame, chaque trame comportant au moins le message à transmettre, un silence de durée aléatoire séparant l'émission de chaque salve.

Avantageusement, la durée d'un silence est un multiple entier de la durée d'une trame, ce multiple pouvant être égal au minimum à zéro et au maximum à une valeur maximum Nmax déterminée.

De manière préférée, le message à transmettre est répété plusieurs fois à l'intérieur de chaque salve ; la redondance permet de réduire considérablement la probabilité d'une mauvaise réception.

Suivant le protocole, chaque trame comprend un message de répétition comportant un premier indicateur représentant le nombre de durées de trame restant à émettre et un second indicateur représentant le nombre de trames restant à émettre dans la salve considérée. Ces deux indicateurs sont variables : ils sont décrémentés de 1 à chaque trame émise et pendant la durée des silences. Ils permettent de savoir, à la réception, s'il manque une trame et facilitent la détection d'un éventuel brouillage.

Les signaux provenant de deux émetteurs différents n'ayant qu'une probabilité quasi nulle d'avoir un silence de durée identique entre deux salves, on s'assure de cette manière qu'en cas d'émissions simultanées, le décalage introduit par le silence permet une réception acceptable d'au moins une trame de chacun des signaux.

La présente invention concerne aussi un système d'émission pour la transmission d'un message codé numériquement comprenant un émetteur muni d'une antenne, des moyens de codage pour coder un message à émettre connectés par une sortie à une entrée de l'émetteur, des moyens de déclenchement connectés par une sortie aux moyens de codage. Ledit émetteur et les moyens de codage sont disposés de part et d'autre d'un plan de masse.

Les caractéristiques et avantages de l'invention apparaîtront mieux après la description qui suit donnée à titre explicatif et nullement limitatif. Cette description se réfère à des dessins annexés sur lesquels :

- la figure 1, déjà décrite, représente schématiquement un système de surveillance comportant des systèmes d'émission de signaux radiofréquences,
- la figure 2 représente schématiquement une vue en éclatée d'un système d'émission conforme à l'invention,
- la figure 3 représente schématiquement une vue en coupe d'un système d'émission conforme à l'invention,
- la figure 4 représente schématiquement une variante de réalisation d'un système d'émission conforme à l'invention,
- la figure 5 représente schématiquement une autre variante de réalisation d'un système d'émission selon l'invention,
- la figure 6 représente schématiquement un émetteur du système d'émission conforme à l'invention,
- la figure 7 représente schématiquement un protocole de transmission d'un message conforme à l'invention,
- la figure 8 représente schématiquement la structure d'une trame contenant un message à transmettre.

La figure 2 représente schématiquement une vue en éclatée d'un système d'émission conforme à l'invention.

Un premier support isolant 20 supporte sur une première face 22 un émetteur de signaux radiofréquences 24 muni d'une antenne (non représentée sur la figure 2). Une feuille métallique imprimée sur une seconde face 26 du support 20 constitue un plan de masse 28.

Chacune des faces 22, 26 du premier support 20 possède des pistes conductrices 29 (une seule est représentée pour simplifier la figure) permettant la connexion de l'émetteur 24 aux autres éléments du système. Le parcours des pistes conductrices 29 reposant sur la face 26 est découpé dans la feuille conductrice : ces pistes conductrices sont donc isolées du plan de masse 28.

Un second support isolant 10 supporte sur une première face 12 des moyens de codage 14. Sur cette face 12, ainsi que sur la seconde face 16 du support 10, sont imprimées des pistes conductrices 18 (une seule est représentée pour simplifier la figure). Ces pistes 18 permettent de connecter les moyens de codage 14 aux autres éléments du système d'émission. Certaines des pistes conductrices formées sur la première face 12 sont reliées à des pistes conductrices formées sur la seconde face 16 par des ouvertures pratiquées dans le support 10.

On voit sur la figure 2 que le plan de masse 28 est formé sur la face 26 du support 20 en regard de la face référencée 16 du support 10. De cette manière, les moyens de codage 14 et l'émetteur 24 muni de son antenne sont disposés de part et d'autre du plan de masse 28.

Des ouvertures 19 sont pratiquées dans chacun des supports 10, 20. Ces ouvertures 19 permettent la connexion de pistes conductrices situées sur des faces opposées du même support ou bien sur des faces de supports différents. Les connexions entre pistes de supports différents réalisées de cette manière sont de courte longueur. On réduit ainsi leur tendance à fonctionner comme des antennes parasites.

D'autre part, ces connexions permettent de solidariser les supports entre eux.

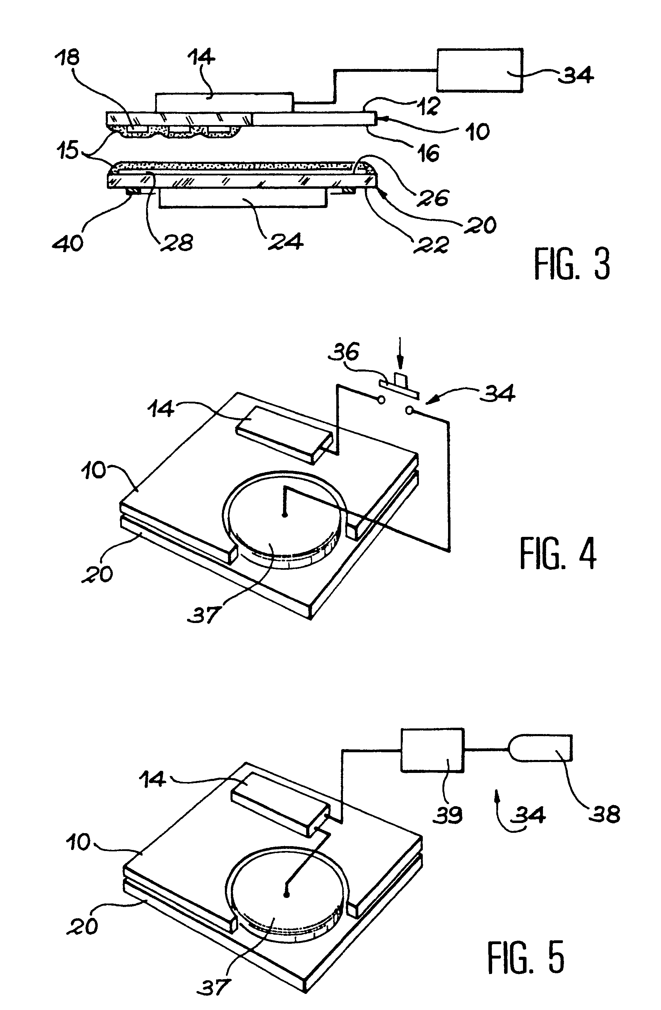

Comme on peut le voir sur la vue en coupe représentée schématiquement figure 3, les pistes conductrices 18 disposées sur la face 16 du support 10 et le plan de masse 28 (ainsi que les pistes conductrices disposées sur la face 26 du support 20 mais non représentées sur la vue en coupe) sont recouverts d'une fine couche isolante 15 permettant d'assurer l'isolation électrique des pistes et du plan de masse autrement en contact.

A nouveau en référence à la figure 2, on voit que l'émetteur 24 est séparé des moyens de codage 14 par le plan de masse 28. Cela permet un découplage électrique de ces deux éléments tout en conservant un faible encombrement. On évite ainsi des interactions perturbatrices entre les moyens de codage 14 et l'émetteur 24 de signaux de radiofréquence.

Cette disposition des divers éléments du système d'émission permet aussi de réduire l'influence des effets de peau dûs à la proximité éventuelle du corps humain ou tout autre corps perturbateur.

Le support 10 présente une large ouverture 21 pour le passage d'une batterie (non représentée sur la figure 2) formant un moyen d'alimentation électrique connecté par une borne au plan de masse 28. Cette batterie fournit l'énergie électrique nécessaire au fonctionnement des moyens de codage et de l'émetteur.

Les moyens de codage 14 sont constitués dans cette réalisation par un microprocesseur 30 à mémoire morte réenregistrable (EEPROM) intégrée 32, par exemple du type de celui commercialisé par la Société PHILIPS sous la référence PCF 84 C 121.

De cette manière, les messages codés peuvent être enregistrés préalablement de façon simple, économique et rapide. Ces messages codés sont définis lors de l'installation du système en fonction de la destination du système d'émission. C'est lors de cette programmation que l'on choisit les paramètres utiles au protocole d'émission : par exemple, choix de la vitesse de transmission des informations codées, choix des codes d'identification, etc... Ces paramètres peuvent être modifiés simplement à volonté. De plus, si l'on désire changer la destination du système d'émission, il suffit d'enregistrer de nouveaux messages adéquats dans la mémoire morte réenregistrable 32.

Le microprocesseur 30 gère les émissions de signaux de radiofréquence : non seulement il code le message à transmettre, mais grâce à des périphériques usuels (non représentés) tels que compteur ou horloge, il permet la commande éventuelle d'émissions périodiques en dehors de tout déclenchement extérieur.

Par ailleurs, le système d'émission comporte des moyens de déclenchement 34.

Selon une variante de réalisation représentée schématiquement sur la figure 4, les moyens de déclenchement 34 sont réalisés par un interrupteur 36 à bouton-poussoir. Une action sur le bouton-poussoir permet d'établir le contact électrique entre la batterie 37 et les moyens de codage. Dans cette réalisation, le système d'émission consomme de l'énergie uniquement lorsqu'il émet un signal de radiofréquence.

Selon une autre variante de réalisation représentée schématiquement sur la figure 5, les moyens de déclenchement 34 comportent un capteur 38 délivrant sur une sortie un signal de déclenchement analogique converti en un signal numérique et mis en forme par un circuit de conversion 39. Dans cette variante, les moyens de codage 14 sont connectés en permanence à la batterie 37. Le signal de déclenchement est lu par les moyens de codage 4 et comparé à un seuil de déclenchement. Lorsque le signal de déclenchement dépasse ce seuil fixé préalablement, les moyens de codage 14 commandent une émission.

On a vu précédemment qu'une émission périodique faisant état des mesures du capteur 38 peut aussi être commandée alors que le seuil n'est pas franchi. Cette émission périodique permet de s'assurer du bon fonctionnement du système d'émission.

Les capteurs utilisés peuvent être de différents types : hygromètre, thermomètre, détecteur de présence ou autre.

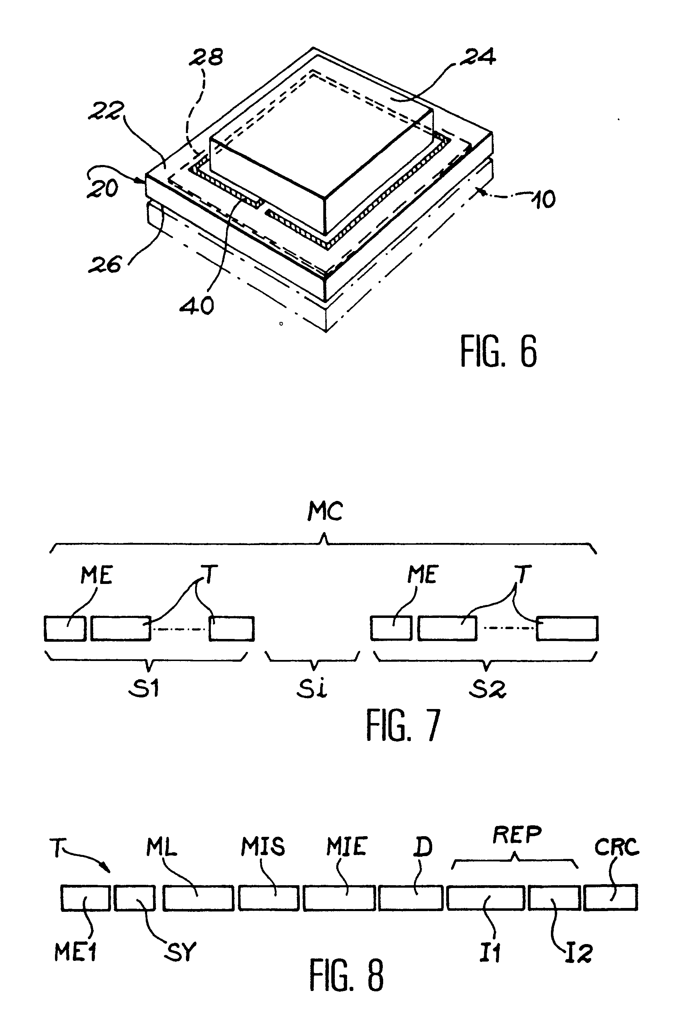

La figure 6 représente schématiquement une vue de la face référencée 22 du support 20. Cette face 22 supporte l'émetteur 24 qui peut être par exemple du type "Colpitts". Ce type d'émetteur étant bien connu, il est inutile d'en donner ici une description détaillée. Dans la réalisation représentée, l'émetteur 24 est contenu dans un boîtier métallique faisant office de blindage.

Dans la réalisation représentée sur la figure 5, l'antenne 40 est constituée par une piste conductrice imprimée sur la face 22 du support 20 en forme de spire entourant l'émetteur 24. Cette disposition permet de réduire les bruits parasites en direction des moyens de codage lors de l'émission grâce, en particulier, au plan de masse isolant les moyens de codage de l'antenne 40.

La figure 6 représente schématiquement le protocole de transmission d'un message émis par un système d'émission. Deux salves S1 et S2 de structure identique sont émises successivement. Les salves S1 et S2 sont séparées d'un silence Si correspondant à une absence d'émission. Les salves S1, S2 et le silence Si forment le message complet MC.

Chaque salve débute par un message d'éveil ME composé par exemple d'un octet de 0. Ce message d'éveil ME permet la mise en service du récepteur, destinataire du message.

Outre le message d'éveil ME, chaque salve comporte NT trames T, NT étant un nombre entier choisi par exemple compris entre 1 et 8.

Le nombre NT est choisi préalablement et peut être modifié à volonté en changeant la programmation du système d'émission. On comprend que le nombre de trames composant une salve peut être différent pour chaque système d'émission. Le choix du nombre NT dépend de l'environnement du système d'émission. Dans un environnement peu perturbé électromagnétiquement, NT est choisi préférentiellement entre 2 et 4 alors que dans un environnement très perturbé, NT est choisi supérieur à 4.

La figure 7 représente schématiquement la structure d'une trame T. Comme on peut le voir, la trame T débute par un message d'éveil ME1 composé par exemple d'un octet de 0. Il est suivi d'un message de synchronisation SY, codé par exemple sur 8 bits, qui permet la synchronisation de la détection. Ces messages de service sont suivis par le message utile composé d'un message de localisation ML, codé par exemple sur 16 bits, et débutant par l'octet de poids fort. Ce message de localisation ML permet d'éviter la confusion entre des émissions provenant de systèmes d'émission géographiquement proches mais situés dans des locaux différents (par exemple, provenant de systèmes d'émission localisés dans des maisons voisines).

Le message de localisation ML est suivie par un message d'identification du système MIS, codé par exemple sur 3 bits. Pour une même localisation, plusieurs récepteurs appartenant à des systèmes différents peuvent capter le message transmis. Le message MIS permet de s'assurer de la détection du signal par le récepteur du système auquel appartient le système d'émission.

Le message MIS est suivi par un message d'identification du système d'émission MIE, codé par exemple sur 5 bits. Le message MIE est suivi par l'émission du message de données D, codé par exemple sur 8 bits, qui contient l'information utile : état d'un capteur, déclenchement d'une alarme, ou autre.

Le message de données D est suivi par un message de répétition REP constitué par un premier indicateur I1 représentant le nombre de durées de trame restant à émettre jusqu'à la fin du message complet MC, codé par exemple sur 5 bits et par un second indicateur I2, codé par exemple sur 3 bits et représentant le nombre de trames restant à émettre dans la salve considérée. On verra plus loin l'intérêt de ce message REP.

Une trame T est terminée par l'émission d'un message CRC, codé par exemple sur 16 bits et comportant des paramètres de reconnaissance de la configuration. Lors de la réception, ce message permet de détecter les erreurs de transmission. Cette détection d'erreur de transmission est usuelle : une trame est prise en compte par le récepteur uniquement si les calculs de vérification effectués à l'aide du CRC ne révèlent pas d'anomalie.

Grâce à ce protocole de transmission, on s'assure de la bonne réception par plusieurs opérations complémentaires : émission de deux salves successives, répétition des trames dans chaque salve, utilisation du message CRC.

D'autre part, le message transmis peut être validé grâce à la présence du silence Si séparant l'émission de la deuxième salve S2 de l'émission de la première S1.

Chaque trame T présente une durée de trame déterminée puisque le nombre de bits la composant et la vitesse de transmission sont fixés. La durée du silence est égale à un multiple entier N (pouvant être nul et inférieur ou égal à une valeur maximum Nmax) de la durée d'une trame. N est déterminé aléatoirement à chaque émission par le système d'émission (plus particulièrement par ses moyens de codage).

Chaque trame comporte l'indicateur I1 représentant le nombre de durées de trame restant à émettre et l'indicateur I2 indiquant le nombre de trames restant à émettre dans la salve considérée. On connaît, de plus, le nombre de trames (et donc de durées de trame) contenu dans chaque salve, puisque celui-ci est fixé préalablement. On peut donc déduire à la réception, la durée du silence Si. On sait aussi, que lorsque I1 est égal à I2, on est positionné dans la dernière salve. Ces informations permettent une vérification supplémentaire de la validité de la transmission.

D'autre part, s'il arrive que deux systèmes d'émission émettent un signal simultanément en direction du même récepteur, les trames de la première salve risquent d'être brouillées. L'introduction d'un silence aléatoire calibré en durée de trame permet d'introduire un décalage temporel assurant la bonne réception d'au moins une trame en provenance de chacun des systèmes d'émission.

Ainsi, le procédé de transmission de message codé numériquement conforme à l'invention permet bien de s'assurer de la validité de l'information reçue au niveau de la réception par de nombreuses redondances et l'introduction d'un silence de durée aléatoire. On évite ainsi la perte d'un message ou le déclenchement sans motif d'une alarme.

D'autre part, un système d'émission conforme à l'invention permet d'engendrer et d'émettre de tels messages codés numériquement suivant le protocole défini plus haut. Ce système d'emission est très souple d'emploi : les paramètres concernant l'émission et le codage sont programmés et peuvent être modifiés de manière simple. De plus, la disposition des divers éléments (émetteur, moyens de codage) rendent le système d'émission peu encombrant et peu sensible aux perturbations électromagnétiques.

## Revendications

1. Procédé de transmission d'un message codé numériquement, caractérisé en ce qu'il consiste à émettre au moins deux salves (S1, S2) successives comprenant chacune au moins une trame (T), chaque trame (T) comportant au moins le message à transmettre, un silence (Si) de durée aléatoire séparant l'émission de chaque salve (S1, S2).

2. Procédé de transmission selon la revendication 1, caractérisé en ce que, une trame (T) ayant une durée de trame déterminée, la durée d'un silence (Si) est égale à N fois la durée de trame, N étant un nombre entier aléatoire compris entre 0 et une valeur maximum Nmax.

3. Procédé de transmission selon la revendication 2, caractérisé en ce que chaque trame (T) comprend un message de répétition (REP) comportant un premier indicateur (I1) représentant le nombre de durées de trame restant à émettre et un second indicateur (I2) représentant le nombre de trames restant à émettre dans une salve considérée.

4. Procédé de transmission selon la revendication 1, caractérisé en ce que chaque trame (T) comporte un message de synchronisation (SY).

5. Procédé de transmission selon la revendication 1, caractérisé en ce que chaque trame débute avec un message d'éveil (ME1).

6. Procédé de transmission selon la revendication 1, caractérisé en ce que l'émission de chaque salve (S1, S2) débute par un message d'éveil (ME).

7. Système d'émission pour la mise en oeuvre du procédé de transmission d'un message codé numériquement selon la revendication 1 comprenant un émetteur (24) muni d'une antenne (40), des moyens de codage (14) pour coder un message à émettre connectés par une sortie à une entrée de l'émetteur (24), des moyens de déclenchement (34) connectés par une sortie aux moyens de codage (14), caractérisé en ce que l'émetteur (24) et les moyens de codage (14) sont disposés de part et d'autre d'un plan de masse (28).

8. Système d'émission selon la revendication 7, caractérisé en ce que l'antenne (40) est constituée par une spire conductrice entourant l'émetteur (24).

9. Système d'émission selon la revendication 7, caractérisé en ce que l'émetteur (24) et l'antenne (40) sont disposés sur une face (22) d'un premier support isolant (20), le plan de masse (28) reposant sur une seconde face (26) de ce premier support isolant (20), les moyens de codage (14) étant disposés sur un second support isolant (10) solidaire du premier support isolant (20).

10. Système d'émission selon la revendication 7, caractérisé en ce que les moyens de codage (14) comprennent un microprocesseur (30) connecté à une mémoire morte réenregistrable (32).

11. Système d'émission selon la revendication 7, caractérisé en ce que les moyens de déclenchement (34) comprennent un interrupteur à bouton-poussoir (36).

12. Système d'émission selon la revendication 7, caractérisé en ce que les moyens de déclenchement (34) comprennent un capteur (38) délivrant sur une sortie un signal de déclenchement.

FIG. 1

FIG. 2

FIG. 3

FIG. 4

FIG. 5

FIG. 6

FIG. 7

FIG. 8